# EUROPEAN PATENT SPECIFICATION

(11) **EP 0 340 281 B1**
(45) Date of publication and mention of the grant of the patent: **23.03.1994**
(21) Application number: 88909869.5
(22) Date of filing: 13.10.1988
(51) Int. Cl.: B24B 1/04

(54) **ORBITAL TABLE FOR MACHINE TOOLS**
ORBITALER PISCH FÜR WERKZEUGMASCHINEN
TABLE ORBITALE POUR MACHINE-OUTILS

(30) Priority: 13.10.1987 US 107306
(43) Date of publication of application: 08.11.1989
(73) Proprietor: EXTRUDE HONE CORPORATION, Irwin PA 15642 (US)
(72) Inventor: JENKINS, William, D. Extrude Hone Corporation, Irwin, PA 15642 (US); RHOADES, Lawrence J. Extrude Hone Corporation, 8075 Penssylvania Avenue Irwin, PA 15642 (US)
(74) Representative: Tubby, David George
(86) International application number: US8803534
(87) International publication number: WO8903279

(56) References cited:
- EP-A- 0 134 268
- FR-A- 2 360 379
- GB-A- 1 087 708
- GB-A- 2 129 086
- SU-A- 761 028
- US-A- 2 828 949
- US-A- 2 859 667
- US-A- 3 435 562
- US-A- 3 748 790
- US-A- 3 875 702

## Description

This invention relates generally to an orbital table and to the mechanism associated therewith which converts rotary motion input into a plainer orbital motion without rotation. More particularly, this invention relates to a simple, reliable, and inexpensive orbital table for use on, or in conjunction with, any application where orbital motion is desired, such as machine tools where orbital motion of a workpiece, working tool or both is utilized to produce simple or complex machined shapes.

### BACKGROUND OF THE INVENTION

There are a number of metal machining processes where it is essential that the working tool and/or workpiece follow a defined orbital path as the tool works a given workpiece surface. For example, jig boring or grinding machines are well known machine tools where a boring, grinding or polishing wheel, rotating on its own axis, is further made to revolve in a planetary or orbital path in the finishing of circular holes or recesses within metal workpieces. By placing the workpiece on an orbital table, the combined orbital motions of the working tool and the workpiece makes possible the working of complex surfaces other than round.

More recently, orbital grinding machines have come into use which do not utilize rotating grinding wheels, but rather bring a tool and workpiece together, at least one of which is orbiting without rotation against the other. In this application, the working tool is usually formed of a rather hard material and typically has a three dimensional configuration in it working face. By orbiting either the tool or the workpiece, or both, while the two are in contact and biased against each other, using a rather small radius of orbit, the negative configuration of the tool is worked into the workpiece. Because of the orbital motion of either the tool or workpiece, the resulting machined configuration in the workpiece cannot be of an identical size to that of the tool. However, rather complex. intricate and exacting three dimensional configurations can be produced by proper allowance for the orbital action between the tool and the workpiece.

Other more recent and more advanced machining processes, such as total form machining, electrical discharge machining, electro-chemical grinding, and combinations either sequentially or in multifunctional singular operations are utilized which in some applications depend on orbital motion of the work tool and/or workpiece to machine shapes not attainable in any other practical way and at levels of finish and accuracy which are exceptional.

The machine tools and techniques mentioned above, usually utilize conventional X-Y tables in one form or another for effecting the orbital motion as necessary to carry out the process. Conventional X-Y tables are rather expensive and complicated as they are normally produced to satisfy the differing needs of different customers. That is, they are usually produced to have means thereon to effect many different types of orbital paths as may be necessary for differing applications.

While such X-Y tables are usually quite adequate in performing the functions intended, the tables are expensive, tending to be rather large due not only to the complex motion creating hardware, but also to the adjustment mechanism which must be incorporated to permit the setting to variable orbital paths. As the drive mechanisms have been improved to provide more accuracy, variability and controlability, they have also become more expensive, more fragile and more difficult to maintain and calibrate. Of considerable significance is the fact that the X-Y tables are often times far more versatile than is required for many machining applications. For example, in many manufacturing operations is is typical to produce a large number identical pieces, all of which must be produced by identical machining operations. In such manufacturing operations, machine tools may be captivated to the task of performing an identical operation over and over again on virtually hundreds or even thousands of identical workpieces. On such machines used in manufacturing operations there is obviously no need for the versatility offered by the more troublesome, expensive and complex X-Y tables.

### SUMMARY AND OBJECTS OF THE INVENTION

This invention relates to a new simple, reliable and low cost orbital table for use in any application where such tables are currently utilized, and in particular for use on, or in conjunction with, machine tools, to which a workpiece can be affixed and made to orbit in a given, predefined circular, orbital path. Because of its low cost, the orbital table of this invention will find particular utility in those machining operations where all that is needed is to have a work table that will orbit in a single, predetermined circular path. In addition to its lower cost, as compared to conventional X-Y tables, the orbital table of this invention provides added advantages of being more accurate, lighter in weight and capable of being produced at considerable size reductions. The orbital table of this invention is fabricated to effect a predetermined orbital movement, and accordingly has no mechanism or adjustments for changing the movement. In addition, the orbital table of this invention does not utilize any sliding linkage as is found in most X-Y tables, which tend to loosen quickly with use and adversely affect the accuracy of the rotation and precision of control. Accordingly, the orbital table of this invention provides the added advantage of maintaining the desired fixed motion without loss in accuracy due to the wearing of sliding linkage, and without any need for concern that the adjustments could be inadvertantly moved to unknowingly alter the movement, and therefore without any need to periodically check the adjustments to assure the proper settings.

Accordingly, it is an object of this invention to provide a simple, reliable and inexpensive orbital table having a preset radius of orbit for the most demanding of orbital table applications, such as machine tool applications, and in particular orbital grinding and polishing machines.

Another object of this invention is to provide a new light weight orbital table for machine tools and other applications, which is much simpler in construction than the conventional X-Y tables, and does not have any complex mechanism for adjusting to different orbital motions, and can accordingly be produced with considerable size reductions as compared to conventional X-Y tables.

A further object of this invention is to provide an orbital table that will maintain a fixed, preset radius of orbit which does not utilize any sliding linkage that will loosen in operation and adversely affect the accuracy or the orbital motion.

Still another object of this invention is to provide an orbital table which is simpler, more reliable and less expensive than a convention X-Y table.

The invention consists in an orbital table assembly having a top plate which can be made to oscillate in a predetermined orbital path without rotating, comprising a fixed base member, a top plate over said fixed base member, a linkage member interposed between said base member and said top plate, means for oscillating said top plate in an orbital path offset from the axis of rotation, of a rotary drive member extending from the base member, a first set of parallel deflecting arms securing said linkage member to said base member and a second set of parallel deflecting arms at right angles to said first set securing said top plate to said linkage member.

The present invention is to be distinguished from that described in GB 1087708 (Mills) in which, while parallel link pairs are present, they are utilized to control the straight line motion imparted by a lead screw.

### BRIEF DESCRIPTION OF THE DRAWINGS

Figure 1 is an isometric view of a preferred embodiment of this invention illustrating the three major components of the orbital table in a spaced apart relationship.

Figure 2 is a sectional side view of the orbital table illustrated in Figure 1 with the section taken at line 2-2 depicted in Figure 3.

Figures 3, 4 and 5 are top views of an orbital table substantially as shown in Figure 1 and 2 illustrating three different positions of the orbital movement. Unlike Figures 1 and 2, the base plate in these figures is made somewhat larger than the tool and linkage plate to better illustrate the relative displacement of the plates during operation.

### DESCRIPTION OF THE PREFERRED EMBODIMENT

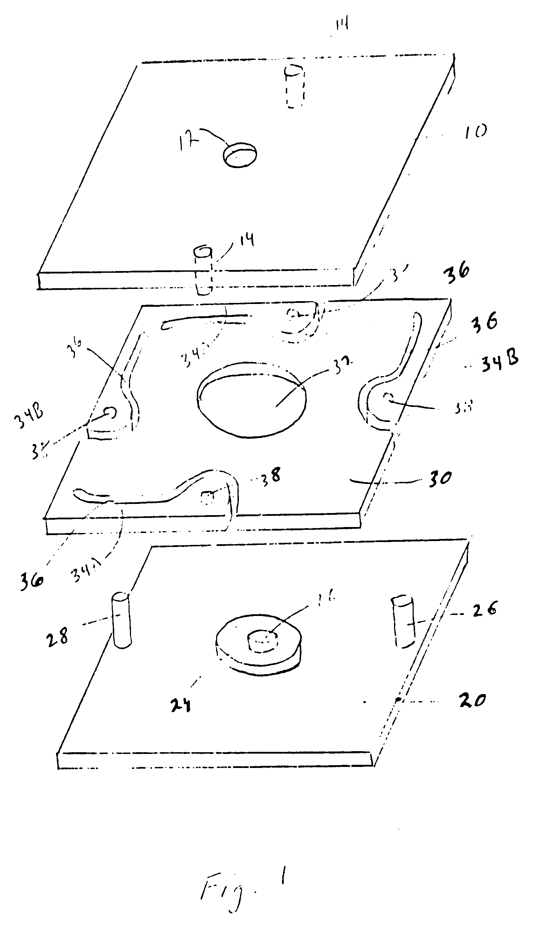

With reference to Figure 1, one of the simplest and a preferred embodiment of this invention consists merely of three essential plate components, namely a tool plate 10 at the top, a drive plate 20 at the bottom and an linkage plate 30 therebetween. Drive plate 20 at the bottom, forms the base member for the orbital table an should be secured and fixed as the application dictates. A rotational drive means, such as an electric motor 4 is secured to the underside of drive plate 20 with its arbor 6 extending vertically upward through hole 22 in the center of, and perpendicular to, the upper surface of drive plate 20. A drive spindle 24, having a relatively short cylindrical body, is secured to the motor arbor such that activation of electric motor 4 will cause the rotation of drive spindle 24 in a plane parallel to and just above the top surface of drive plate 20. A spindle cam 26 is secured to the top surface of drive spindle 24 with its axis offset a predetermined distance from the drive spindle axis. A pair of parallel, link pins 28 are attached to the upper surface of drive plate 20 diametrically opposed on either side of drive spindle 24 with their axis perpendicular to the top surface of drive plate 20 and thus parallel to the axis of rotation of drive spindle 24.

Linkage plate 30, which may, but not essentially, have the same peripheral dimensions as drive plate 20, is provided with a hole 32 through the center thereof, and with a flex-arm 34 on each side of the four sides of the rectangular plate. As can be seen from Figure 1, the flex-arms 34 are formed in this embodiment by cutting slots 36 through plate 30 somewhat parallel to each edge of the plate 30, such that an elongated portion on each edge of the plate forms a flex-arm 34 which is attached at only one end of the plate 30 near the corner of thereof. The section of metal where the flex-arms 34 meet linkage plate 30 must be thin enough to permit a modest lateral deflection of flex-arms 34 relative to linkage plate 30. Accordingly, two pairs of parallel flex-arms 34A and 34B are formed on opposite sided of plate 30, such that each pair is perpendicular to the other. Each pair of parallel flex-arms 34A and 34B are diametrically opposed on either side of hole 32 at an angle of 90 degrees to the other pair. Each flex-arm 34 is provided with a hole 38 through the free end thereof perpendicular to the surface of plate 30, with the axis thereof lying in a vertical plane passing through the axis of rotation of said drive spindle 24. Flex-arms 34B, and accordingly linkage plate 30 are attached to drive plate 20 by fitting the holes 36 therethrough over link pins 28 on drive plate 20, and accordingly fitting hole 32 over drive spindle 24. Link pins 28 may fit into holes 36 only as tight as is necessary to permit a slight pivotal action of flex-arms 34B on pins 28, or if the radius of orbit is small, flex-arms 34B may be fitted tightly onto pins 28. Conversely, hole 32 should be significantly larger than drive spindle 24 to permit rotation of drive spindle 24 without interference.

Tool plate 10, which is the orbiting plate, and which may, but not essentially, have the same peripheral dimensions as plates 20 and 30, is provided with a hole through the center which in essence forms a spindle cam bearing 12. A pair of parallel link pins 14 are secured to the underside of tool plate 10 diametrically opposed on either side of spindle cam bearing 12 and spaced so that they will mate with the holes through flex-arms 34A in linkage plate 30. Accordingly, tool plate 10 is secured to linkage plate 30 by inserting link pins 12 into holes 34A and such that spindle cam 26 is rotatable fitted into spindle cam bearing 12. Since spindle cam 26 in not centered on drive spindle 24 or drive plate 20, one or both pair of flex-arms 34 will have to be deflected somewhat in order to get spindle cam bearing 12 over spindle cam 26. As noted above for flex-arms 34B, flex-arms 34A may be pivotally or securely connected on link pins 12.

In operation, the above described orbital table is activated by activating the rotational drive means, e.g. electric motor 4 secured to the bottom of drive plate 20. This of course will cause rotation of drive spindle 24 on its own axis, while spindle cam 26, which is offset from the drive spindle axis, will oscillate in an orbital path around the spindle axis. Since drive plate 20 is secured in a stationary position, suitable clearance must be provided at hole 22 to permit the free rotation of arbor 8 extending therethrough. As noted above, linkage plate 30 is secured to drive plate 20 via link pins 28, so that linkage plate 30 is likewise not free to rotate. Similarly, tool plate 10 is secured to linkage plate 30 via link pins 14, so that tool plate 10 cannot rotate either. However, since orbiting spindle cam 26 is inserted into spindle cam bearing 12 through the center of tool plate 10, it should be apparent that tool plate 10 will not remain stationary, but rather must move in unison with the orbital movement of spindle cam 26. Such an orbital motion without rotation is permitted by the deflection of flex-arms 34.

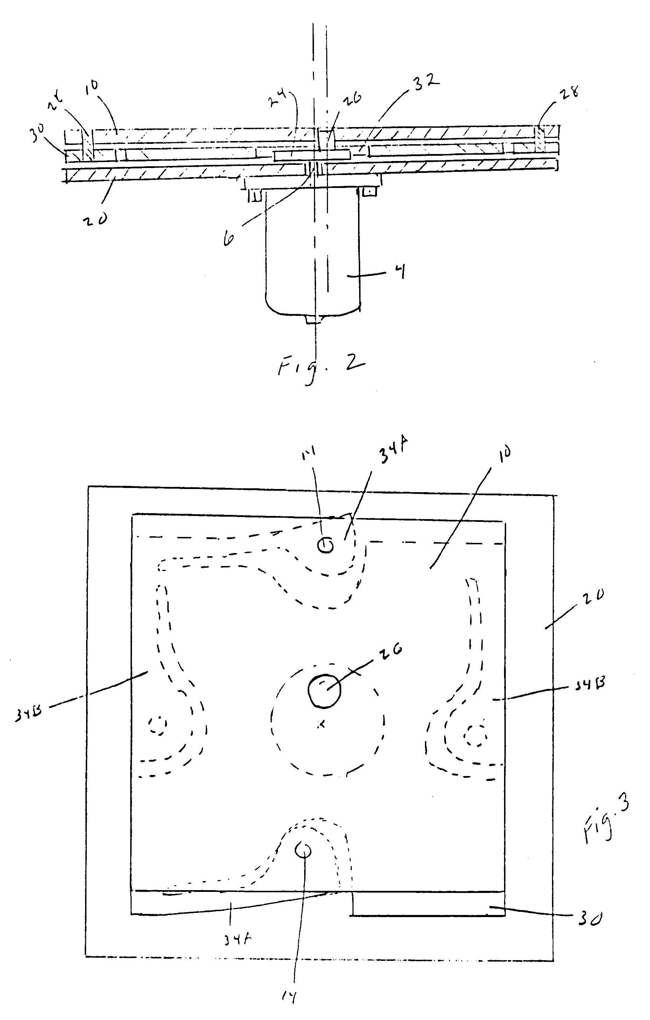

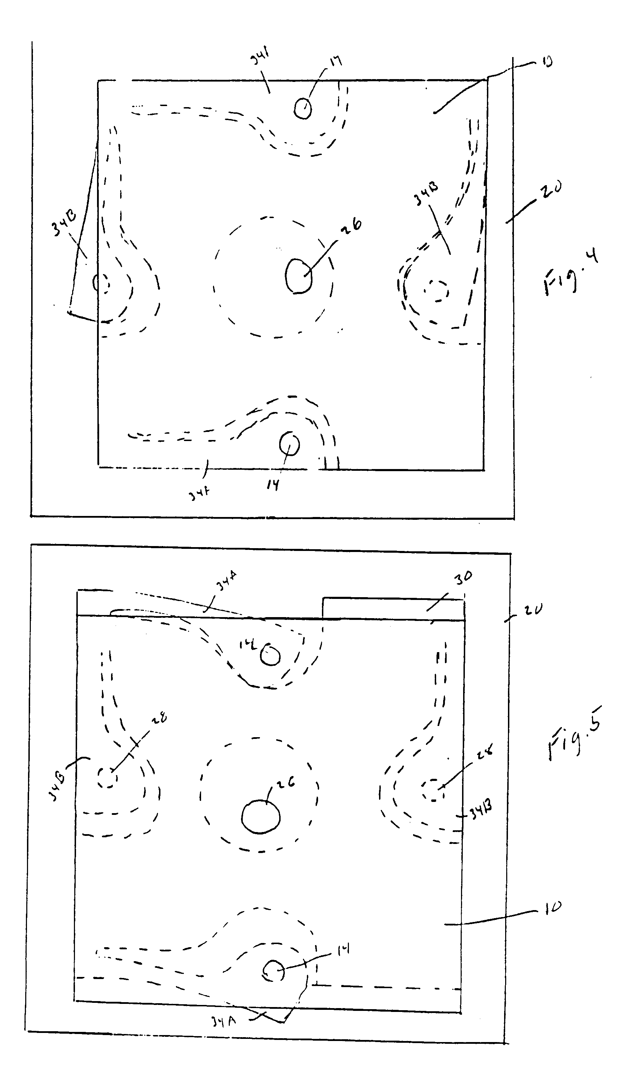

As may be apparent from a close look the the linkage of flex-arms 34, tool plate 10 cannot rotate, but oscillates in an orbital path as depicted in Figures 3, 4 and 5. With reference to Figure 3, which is a top view of the orbital table, it can be seen that when spindle cam 26 is at the twelve O′clock position, tool plate 10 is positioned as far to the top side as it will go, that is, top side as viewed in the drawings. To be moved to that position, link pins 14 will also be moved to the top side along with tool plate 10 causing flex-arms 34A to be elastically deflected such that the free end thereof is deflected towards the top by an equal amount. Assuming a clockwise rotation of drive spindle 24, spindle cam 26 will move from the twelve O′clock position as shown in Figure 3 by rotating towards the three O′clock position. Tool plate 10 will of course follow the same path but without rotating. Accordingly, as spindle cam 26 rotates from the twelve to the three O′clock position, flex-arms 34A start retracting to their normal undeflected position. The movement of tool plate 10 to the right, however, as opposed to top and bottom movement, cannot be accommodated by any deflection of flex-arms 34A. Instead, link pins 14 will pull the entire body of linkage plate 30 to the right, and thus flex arms 34B are elastically deflected to the left as the body of linkage plate 30 moves to the right. When spindle cam 26 is in the three O′clock position, flex-arms 34A will have completely returned to their normal undeflected position, while flex-arms 34B, will be elastically deflected to their furthest left position, as both tool plate 10 and linkage plate 30 are moved to this furthers right position, as depicted in Figure 4. In a like fashion, as spindle cam 26 rotates from the three to the six O′clock position, the following quarter orbital movement of tool plate 10 is permitted by the returning movement of flex-arms 34B to their undeflected position and the deflection of interaction arms 34A in a downward direction. Figure 5 illustrates the relative positions when spindle cam 26 is in the six O′clock position. It can be seen that all left and right displacement of tool plate 10 is accommodated by the deflection of flex-arms 34A as tool plate 10 moves left and right with respect to linkage plate 30. On the other hand, all top and bottom displacement of tool plate 10 is accommodated by the deflection of link pins 34B as tool plate 10 and linkage plate 30 move jointly towards the top or bottom with respect to drive plate 20. Since linkage plate 30 does move with respect to drive plate 20, hole 32 through the center thereof must be large enough to accommodate such movement without obstruction. It should be noted that the spindle cam offset as shown in the drawings was made significantly large so that relative displacements of the components would be readily apparent from viewing the drawings. While such displacements would be within the scope of this invention, smaller offsets would be more common, particularly in orbital grinding where the radius of orbits are typically within the range of 0.0020 to 0.0030-inch.

While the above described embodiment of this invention is ideal in its simplicity in that the entire unit is fabricated from simple plate and rod stock with very simple fabrication and machining requirements, it is obvious that numerous modifications and different embodiments could be utilized without departing from the spirit of the invention. For example, it should be obvious, of course, that the preset radius of orbit can be varied from one table to the next by merely changing the offset distance of spindle cam 26 from the axis of spindle 24. For added life, it should also be obvious that spindle cam 26 could be journaled in a ball or roller bearing instead of the solid bearing 12 as shown. Drive plate 20 could also be produced in many different forms depending on the application where the orbiting table will be utilized, and could in fact be eliminated provided some sort of base member is utilized to support the upper two plates 10 and 30, and to provide a pivotal coupling to the free ends of flex-arms 34B to prevent plate 30 from rotating. Linkage plate 30 could also be fabricated in many different forms, as could flex-arms 34.

Considerable modifications could be made to the flex-arms 34 which could be separate rod type components pivotally affixed at both ends with any form of linkage member that will maintain them in the spaced relationship as shown. In addition, two or more aligned flex-arms could be utilized in place of each flex-arm 34 as shown. All that is necessary is that the arms or rods be rigid so as to prevent rotation of tool plate 10, but yet capable of readily deflecting or pivoting in the direction perpendicular thereto to accommodate the orbital motion. On the other hand, it should be apparent that all that is really necessary is to have a deflecting means that will secure tool plates 10 to linkage plate 30 and secure linkage plate 30 to base plate 20 sufficiently to prevent them from rotating but yet will deflect laterally to allow lateral movement of linkage plate 30 in one direction while allowing lateral movement of tool plate 10 in a direction perpendicular to the aforesaid direction.

While tool plate 10 is shown to have a flat upper surface for simplicity, it is obvious that some sort of machining may be necessary on the top surface in order to attach some sort of workpiece holding tool or the like.

Since the circular path of orbit of tool plate 10 is set and defined by the circular path of orbit of spindle cam 26 it is obvious that orbital paths other than circular, such as an oval path, for example, could be created by providing a spindle cam which orbits in any such noncircular path. this could be done by providing a cam which changes its distance from the spindle axis as the spindle rotates. This could be effected by a cam which is slideable with respect to the spindle axis and then providing a stationary template that will guide the cam in a noncircular path as defined by the template.

## Claims

1. An orbital table assembly having a top plate (10) which can be made to oscillate in a predetermined orbital path without rotating, comprising a fixed base member (20), a top plate (10) over said fixed base member, a linkage member (30) interposed between said base member (20) and said top plate (10), means (26) for oscillating said top plate in an orbital path offset from the axis of rotation of a rotary drive member (4) extending from the base member, a first set of parallel deflecting arms (34B) securing said linkage member to said base member and a second set of parallel deflecting arms (34A) at right angles to said first set securing said top plate (10) to said linkage member (30).

2. An orbital table according to claim 1 wherein said first and second set of parallel deflecting arms (34B, 34A) each consist of a pair of like parallel deflecting arms.

3. An orbital table according to claim 1 wherein said first and second set of parallel deflecting arms (34B, 34A) consist of a first pair (34B) of parallel deflecting arms one end of which are connected to said linkage member and the other end pivotally connected to said base member at points (38, 28) diametrically opposed on either side of the axis of rotation, a second pair of parallel deflecting arms (34A) perpendicular to said first pair of deflecting arms (34B) with one end thereof connected to said linkage member and the other end pivotally connected to said top plate at points (38, 14) diametrically opposed on either side of the axis of rotation, each pair of said deflecting arms oriented in a plane perpendicular to the axis of rotation.

4. An orbital table according to claims 1, 2 or 3, wherein said base member consists, at least in part, of a base plate (20) parallel to said top plate and having attached thereto means (26) for causing an orbital motion of a cam member about said axis of rotation.

5. An orbital table according to claim 1 wherein said linkage member comprises a rectangular plate member (20).

6. An orbital table according to claim 5 wherein said deflecting arms consist of elongated portions (34A, 34B) of said plate member (30) formed by cutting slots (36) somewhat parallel to each edge of said plate member so that one end of each elongated portion remains deflectably attached to said plate member near a corner thereof while the other end of each elongate portion is free to deflect towards or away from said plate member.

7. An orbital table according to claim 6 wherein the free ends of one pair of parallel elongated portions (34B), are secured to said base member (20) while the free ends of the other pair (34A) of parallel elongated portions are secured to said top plate (10).

8. An orbital table according to claim 7 wherein said free ends of one pair of parallel elongated portions (34B) are secured to pins attached to said base member, while said free end of the other pair of parallel elongated portions (34A) are secured to pins attached to said top plate (10).

9. An orbital table according to claim 1 wherein said rotary drive member consists of an electric motor secured to said base member (20).

## Patentansprüche

1. Orbital-Tisch-Anordnung mit einer oberen Platte (10), die oszillierend auf einer vorbestimmten Umlaufbahn bewegbar ist, ohne sich zu drehen, umfassend einen feststehenden Grundkörper (20), eine obere Platte (10) über dem besagten feststehenden Grundkörper, einen Verbindungskörper (30), der zwischen dem besagten Grundkörper (20) und der besagten oberen Platte (10) angeordnet ist, Mittel zum oszillierenden Bewegen der besagten oberen Platte auf einer zu der Drehachse eines sich von dem Grundkörper erstreckenden Drehantriebsgliedes (4) versetzten Umlaufbahn, einen ersten Satz von parallelen auslenkbaren Armen (34B), die den besagten Verbindungskörper an dem besagten Grundkörper festhalten, und einen zweiten Satz von parallelen auslenkbaren Armen (34A) in rechten Winkeln zu dem besagten ersten Satz, die die besagte obere Platte (10) an dem besagten Verbindungskörper (30) festhalten.

2. Orbital-Tisch nach Anspruch 1, wobei jeder besagte erste und zweite Satz von parallelen auslenkbaren Armen (34A, 34B) aus einem Paar von gleichartigen parallelen auslenkbaren Armen besteht.

3. Orbital-Tisch nach Anspruch 1, wobei der besagte erste und der besagte zweite Satz von parallelen auslenkbaren Armen (34B, 34A) bestehen aus: einem ersten Paar (34B) von parallelen auslenkbaren Armen, von denen jeweils ein Ende mit dem besagten Verbindungskörper verbunden ist und jeweils das andere Ende an dem besagten Grundkörper an Stellen (38, 28) angelenkt ist, die zu beiden Seiten der Drehachse einander diametral gegenüberliegen, und aus einem zweiten, zu dem besagten ersten Paar von auslenkbaren Armen (34B) senkrechten Paar von parallelen auslenkbaren Armen (34A), von denen jeweils ein Ende mit dem besagten Verbindungskörper verbunden ist und jeweils das andere Ende an der besagten oberen Platte an Stellen (38, 14) angelenkt ist, die zu beiden Seiten der Drehachse einander diametral gegenüberliegen, wobei jedes Paar der besagten auslenkbaren Arme in einer zur Drehachse senkrechten Ebene orientiert ist.

4. Orbital-Tisch nach einem der Ansprüche 1, 2 oder 3, wobei der besagte Grundkörper wenigstens zum Teil aus einer zu der besagten oberen Platte parallelen Grundplatte (20) besteht und ihm Mittel (26) zugeordnet sind, um eine Umlaufbewegung eines Mitnehmers um die besagte Drehachse zu bewirken.

5. Orbital-Tisch nach Anspruch 1, wobei der besagte Verbindungskörper ein rechtwinkliges Plattenteil (20) umfaßt.

6. Orbital-Tisch nach Anspruch 5, wobei die besagten auslenkbaren Arme aus länglichen Teilstücken (34A, 34B) des besagten Plattenteiles (20) bestehen, die durch Schneiden von zu jeder Kante des besagten Plattenteiles annähernd parallelen Schlitzen (36) gebildet sind, so daß ein Ende jedes länglichen Teilstückes auslenkbar dem besagten Plattenteil nahe einer Ecke desselben angefügt bleibt, während das andere Ende jedes länglichen Teilstückes frei ist, um sich zu dem besagten Plattenteil hin oder von diesem weg zu auszulenken.

7. Orbital-Tisch nach Anspruch 6, wobei die freien Enden eines Paares von parallelen länglichen Teilstücken (34B) an dem besagten Grundkörper (20) gehalten sind, während die freien Enden des anderen Paares (34A) von parallelen länglichen Teilstücken an der besagten oberen Platte (10) gehalten sind.

8. Orbital-Tisch nach Anspruch 7, wobei die freien Enden eines Paares von parallelen länglichen Teilstücken (34B) an Zapfen festgelegt sind, die an dem besagten Grundkörper angebracht sind, während die freien Enden des anderen Paares von parallelen länglichen Teilstücken (34A) an Zapfen festgelegt sind, die an der besagten oberen Platte (10) angebracht sind.

9. Orbital-Tisch nach Anspruch 1, wobei der Drehantrieb aus einem an dem besagten Grundkörper (20) angebrachten Elektromotor besteht.

## Revendications

1. Un assemblage de table orbitale comportant un plateau supérieur (10), pouvant être conçu pour osciller selon une trajectoire orbitale prédéterminée, sans mouvement de rotation, comprenant un élément de base fixe (20), un plateau supérieur (10) au-dessus du dit élément de base fixe, un élément de liaison (30) agencé entre ledit élément de base (20) et ledit plateau supérieur (10), un moyen (26) pour faire osciller ledit plateau supérieur selon une trajectoire orbitale décalée par rapport à l'axe de rotation d'un élément d'entraînement rotatif (4), s'étendant à partir de l'élément de base, un premier groupe de bras de déviation parallèles (34B) fixant ledit élément de liaison au dit élément de base, et un deuxième groupe de bras de déviation parallèles (34A) agencés à angles droits par rapport au dit premier groupe, fixant ledit plateau supérieur (10) au dit élément de liaison (30).

2. Une table orbitale selon la revendication 1, dans laquelle lesdits premier et deuxième groupes de bras de déviation parallèles (34B, 34A) sont composés chacun d'une paire de bras de déviation parallèles similaires.

3. Une table orbitale selon la revendication 1, dans laquelle lesdits premier et deuxièmes groupes de bras de déviation parallèles (34B, 34A) sont composés chacun d'une première paire (34B) de bras de déviation parallèles, dont une extrémité est connectée au dit élément de liaison, l'autre extrémité étant connectée par pivotement au dit élément de base en des points (38, 28) diamétralement opposés sur chaque côté de l'axe de rotation, une deuxième paire de bras de déviation parallèles (34A), perpendiculaires à ladite première paire de bras de déviation (34B), dont une extrémité est connectée au dit élément de liaison, l'autre extrémité étant connectée par pivotement au dit plateau supérieur en des points (38, 14) diamétralement opposés sur chaque côté de l'axe de rotation, chaque paire des dits bras de déviation étant orientée dans un plan perpendiculaire à l'axe de rotation.

4. Une table orbitale selon les revendications 1, 2 ou 3, dans laquelle ledit élément de base se compose, du moins en partie, d'un plateau de base (20) parallèle au dit plateau supérieur et comportant un moyen (26) qui y est fixé, pour entraîner un mouvement orbital d'un élément de came autour du dit axe de rotation.

5. Une table orbitale selon la revendication 1, dans laquelle ledit élément de liaison comprend un élément de plateau rectangulaire (20).

6. Une table orbitale selon la revendication 5, dans laquelle lesdits bras de déviation se composent de parties allongées (34A, 34B) du dit élément de plateau (30), formées par des fentes de découpage (36) pratiquement parallèles à chaque bord du dit élément de plateau, de sorte qu'une extrémité de chaque partie allongée reste fixée par déviation au dit élément de plateau près d'un coin correspondant, l'autre extrémité de chaque partie allongée pouvant dévier librement pour se rapprocher ou s'éloigner du dit élément de plateau.

7. Une table orbitale selon la revendication 6, dans laquelle les extrémités libres d'une paire de parties allongées parallèles (34B) sont fixées au dit élément de base (20), les extrémités libres de l'autre paire (34A) de parties allongées parallèles étant fixées au dit plateau supérieur (10).

8. Une table orbitale selon la revendication 7, dans laquelle lesdites extrémités libres d'une paire de parties allongées parallèles (34B) sont fixées à des goupilles fixées au dit élément de base, ladite extrémité libre de l'autre paire de parties allongées parallèles (34A) étant fixée à des goupilles fixées au dit plateau supérieur (10).

9. Une table orbitale selon la revendication 1, dans laquelle ledit élément d'entraînement rotatif se compose d'un moteur électrique fixé au dit élément de base (20).
